# EUROPEAN PATENT SPECIFICATION

(11) **EP 0 545 192 B1**
(45) Date of publication and mention of the grant of the patent: **17.09.1997**
(21) Application number: 92119886.7
(22) Date of filing: 23.11.1992
(51) Int. Cl.: F25D 23/06

(54) **Insulation structure for multi-compartment refrigerator**
Isolierungsstruktur für einen Kühlschrank mit mehreren Fächern
Structure isolante pour réfrigérateur à plusieurs compartiments

(30) Priority: 02.12.1991 IT MI913220
(43) Date of publication of application: 09.06.1993
(73) Proprietor: WHIRLPOOL EUROPE B.V., 5507 SK Veldhoven (NL)
(72) Inventor: Tomasin, Graziano, c/o Whirlpool Italia s.r.l., I-21025 Comerio (VA) (IT); Agnoli, Franco, c/o Whirlpool Italia s.r.l., I-21025 Comerio (VA) (IT)
(74) Representative: Guerci, Alessandro

(56) References cited:
- EP-A- 0 161 724
- GB-A- 1 118 581

## Description

This invention relates to a structure insulated for example with expanded polyurethane or the like, such as a refrigerator or freezer cabinet, comprising at least two compartments having inner and outer walls and separated from each other by an interspace, wherein insulating material injected into said structure encloses said compartments on several sides but not their access side, and occupies said interspace.

As is well known, an insulated structure of the aforestated type can present deformations in its side and/or rear walls which are visible from the outside of the structure. This can obviously detract from the appearance of the structure, and represents a problem if the structure is m refrigerator cabinet.

EP-A-161724 relates to refrigerators with local deformation of the outer housing at the level of the separation zone between the two box-shaped liners. In order to obviate this drawback, the above document discloses a flexible element cemented along its edges to the two liners, so that its intermediate portion partly closes access to the separation tone between the two liners.

The above mentioned deformations are related to the plastic nature and cell-like quality of the insulating material, for example polyurethane. If these inherent physical characteristics of polyurethane are compounded by cellular anisotropy resulting from the geometry of said structure or refrigerator cabinet, any deformation originating in such a structure after injecting the insulating material into it can attain unacceptable aesthetic and/or structural levels.

The combination of the said three causes occurs particularly when injecting the polyurethane between the interspaces present between the compartments of the structure or refrigerator cabinet (such as a freezer compartment and a preservation compartment).

During the injection of the expanded polyurethane into the structure or refrigerator cabinet, when it reaches the interspace between the compartments it arranges itself anisotropically with respect to the side walls. When the insulating material sets, there is a considerable retraction of the sides of the cabinet at the interspace, these sides being "sucked" towards the interior of the cabinet.

As stated, this leads to unacceptable aesthetic effects and leads to a weakening of the cabinet structure where said retraction occurs.

An object of the present invention is to provide an insulated structure such as a refrigerator cabinet of the stated type, in which the setting of the insulating material after its injection cannot result in consequent "sucking-in" of the sides of the cabinet.

A further object of the invention is to provide an insulated structure which presents no weakness following the introduction of the insulating material.

A further object of the invention is to provide an insulated structure which does not present surface deformations following the introduction of the insulating material.

These and further objects which will be apparent to the expert of the art are attained by an insulated structure of the aforesaid type, having the features reported in the attached claim 1.

The present invention will be more apparent from the accompanying drawing, which is provided by way of non-limiting example and in which:
Figure 1 is a cross-section through a refrigerator cabinet constructed in accordance with the invention; and
Figure 2 is a perspective view of the cabinet of Figure 1 with some parts omitted for greater clarity.

With reference to said figures, a refrigerator cabinet is indicated overall by 1 and comprises an outer housing 2 enclosing two overlying compartments 3 and 4 which define a freezer compartment and a refrigeration compartment respectively.

The two compartments 3 and 4 are separated by an interspace 6.

Other interspaces 8-13 separate the compartments 3 and 4 from the housing 2.

Each compartment 3 and 4 consists of a hollow substantially parallelepiped body 3A and 4A comprising inner walls 3B and 4B and outer walls 3C and 4C, and an access side 3D and 4D for introducing the food to be preserved into these compartments.

The interspaces 6, 8, 9, 10, 11, 12 and 13 contain a usual insulating material, such as expanded polyurethane, to act as the insulation.

The housing 2 comprises sides 15 and 16, a top 17 and a bottom 18.

At the lateral ends 20 and 21 of the interspace 6 which face said sides 15 and 16 there are provided separator members 22 and 23 comprising a flat part 24 which is inserted into the interspaces 13 and 8, and 10 and 11, respectively.

From that face 25 of each flat part facing the corresponding end 20 and 21 of the interspace 6 there extends a web 26 terminating with an end 27 arranged perpendicular to said web and fixed (in known manner, for example by usual adhesives or the like) to the outer wall 3C of the compartment 3.

Each flat part 24 and the relative web 26 with its end 27 resting against the compartment 3 provides separation between the interspace 6 and the spaces 11 and 13, and also provides a partial connection between said interspace and the spaces 8 and 10.

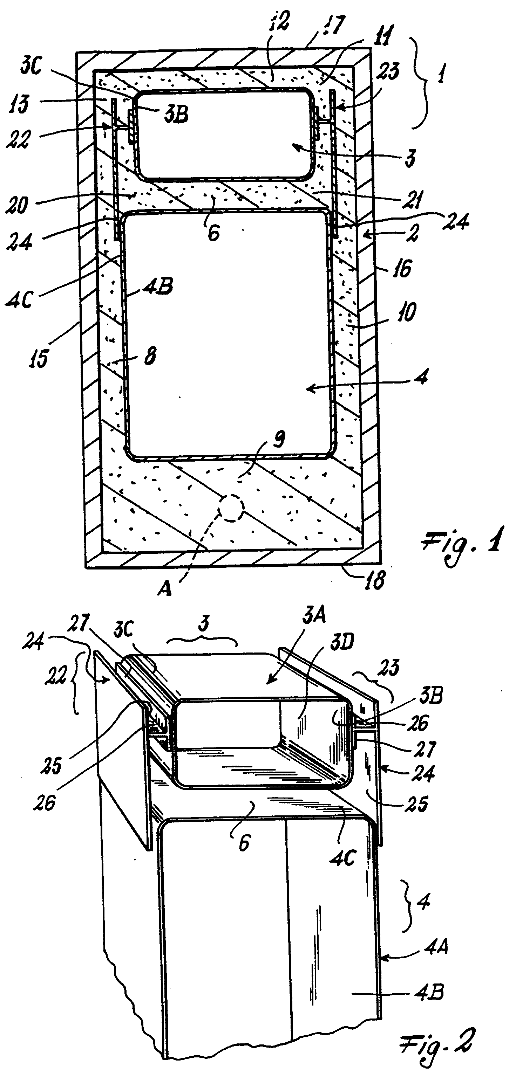

On injecting the polyurethane into the housing 2, which is done in known manner, each member 22 and 23 keeps the stream of said insulating material filling the spaces 8, 10, 11 and 13 separate from the stream filling the interspace 6. Thus, this latter is filled after the spaces 8, 9 and 10 have already been filled (assuming the polyurethane is injected into the zone A of the cabinet 1 shown in Figure 1); after this filling, the spaces 11, 13 and 12 are filled. In this manner, the suction effect which the polyurethane exerts on the sides of the outer enclosure of cabinets of the state of the art is practically nullified. Moreover, to enable the polyurethane to become secured to the separator members during its injection, these latter are formed of a suitable material enabling the polyurethane to adhere to it, such as impact resistant ABS plastic. This prevents the formation of fissures between the polyurethane and said members as as result of temperature changes during the operation of the refrigerator.

In addition, to further separate the stream of material fed into the interspace 6 from that fed into the spaces 8, 10, 11 and 13 during polyurethane injection, the flat part 24 of each separator member 22 and 23 is made to adhere to the body 4A of the compartment 4 by usual adhesives or the like. During the injection, the polyurethane present in the space 8, 13, 11 and 10 urges this flat part into contact with the body to hence isolate the polyurethane introduced into the interspace 6 from that present in said spaces 8-13.

With the described embodiment the sides 15 and 16 of the cabinet 1 do not deform and remain perfectly flat.

One embodiment of the invention has been described.

However, modifications can be provided (for example comprising a plurality of separator members arranged at the ends 20 and 21 of the interspace 6).

## Claims

1. A structure insulated for example with expanded polyurethane or the like, such as a refrigerator or freezer cabinet, comprising at least two compartments (3,4) having inner and outer walls and separated from each other by an interspace (6), wherein insulating material injected into said structure encloses said compartments on several sides but not their access side, and occupies said interspace, characterised in that at both lateral ends (20, 21) of said interspace (6) there are provided rigid separator means (22, 23) which, during its injection into the structure (1), separate the insulating material directed about the compartments (3, 4) from that directed into the interspace (6), each of said rigid separator means (22, 23) comprising a first portion (24) substantially flat positioned at one of the lateral ends (20, 21) of the interspace (6) and a second portion (26, 27) extending from said first portion (24) and resting on the outer wall (3C) of one (3) of said compartments (3, 4), the first portion (24) extending along substantially the whole depth of said compartments (3, 4).

2. An insulated structure as claimed in claim 1, characterised in that the second portion (26, 27) consists of a web (26) acting as a baffle and terminating with a part (27) arranged perpendicular to said web (26) and resting on the outer wall (3C) of said one (3) of the compartments (3, 4).

3. An insulated structure as claimed in claim 2, characterised in that the first portion (24) of the separator means (22,23) is spaced from the other compartment (4).

4. An insulated structure as claimed in claim 2, characterised in that the first portion (24) of the separator means (22,23) rests on the other compartment (4).

5. An insulated structure as claimed in claim 1, characterised in that the separator means (22, 23) are of plastics material to cooperate with the insulating material so as to secure this latter to said separator means.

6. An insulated structure as claimed in claim 2, characterised in that the separator means (22, 23) are fixed by glue or any similar known adhesive to the compartments (3, 4) via the part (27) associated with their web (26) and via their first portion(24) respectively.

## Patentansprüche

1. Gerät, das beispielsweise mit expandiertem Polyurethan oder dergleichen isoliert ist, beispielsweise ein Tiefkühl- oder Kühlschrankgehäuse, mit mindestens zwei Fächern (3, 4), die jeweils eine Innenwand und eine Außenwand aufweisen und durch einen Zwischenraum (6) voneinander getrennt sind, wobei in das Gerät eingeführtes Isoliermaterial diese Fächer auf mehreren Seiten außer ihren Zugangsseiten verschließt und diesen Zwischenraum einnimmt, **dadurch gekennzeichnet,** daß an beiden seitlichen Enden (20, 21) des Zwischenraums (6) feste Trennmittel (22, 23) vorgesehen sind, die während der Einführung des Isoliermaterials in das Gerät das um die Fächer (3, 4) laufende Isoliermaterial von dem in den Zwischenraum (6) laufenden Isoliermaterial trennen, wobei jedes feste Trennmittel (22, 23) einen ersten Teil (24), der im wesentlichen flach ausgebildet und an einem der seitlichen Enden (20, 21) des Zwischenraums (6) angeordnet ist, und einen zweiten Teil (26, 27) aufweist, der vom ersten Teil (24) ausgeht und auf der Außenwand (3C) eines (3) der Fächer (3, 4) ruht, wobei der erste Teil (24) sich im wesentlichen längs der ganzen Tiefe der Fächer (3, 4) erstreckt.

2. Gerät nach Anspruch 1, dadurch gekennzeichnet, daß der zweite Teil (26, 27) aus einem als Prallfläche wirkenden Steg (26) und einem sich an diesen anschließenden Teil (27) besteht, der senkrecht zum Steg (26) steht und auf der Außenwand (3C) des einen Fachs (3) der Fächer (3, 4) ruht.

3. Gerät nach Anspruch 2, dadurch gekennzeichnet, daß der erste Teil (24) der Trennmittel (22, 23) vom anderen Fach (4) getrennt ist.

4. Gerät nach Anspruch 2, dadurch gekennzeichnet, daß der erste Teil (24) der Trennmittel (22, 23) auf dem anderen Fach (4) ruht.

5. Gerät nach Anspruch 1, dadurch gekennzeichnet, daß die Trennmittel (22, 23) aus Kunststoffmaterial bestehen, das mit dem Isoliermaterial derartig zusammenarbeitet, daß das Isoliermaterial an den Trennmitteln befestigt wird.

6. Gerät nach Anspruch 2, dadurch gekennzeichnet, daß die Trennmittel (22, 23) durch Klebstoff oder ähnliche, bekannte Haftmittel an den Fächern (3, 4) über den mit dem betreffenden Steg (26) verbundenen Teil (27) und über ihren betreffenden, ersten Teil (24) befestigt sind.

## Revendications

1. Structure isolée par exemple avec du polyuréthanne expansé ou équivalent, tel qu'un habillage de réfrigérateur ou de congélateur, comportant au moins deux compartiments (3, 4) ayant des parois internes et externes et séparés l'un de l'autre par un espace intermédiaire (6), dans lequel de la matière isolante injectée dans ladite structure enferme lesdits compartiments sur plusieurs côtés mais pas sur leur côté d'accès, et occupe ledit espace intermédiaire, caractérisée en ce que, au niveau des deux extrémités latérales (20, 21) dudit espace intermédiaire (6) sont prévus des moyens de séparation rigides (22, 23) qui, pendant son injection dans la structure (1), séparent la matière isolante dirigée autour des compartiments (3, 4) de celle dirigée dans l'espace intermédiaire (6), chacun desdits moyens de séparation rigides (22, 23) comportant une première partie (24) sensiblement plate positionnée au niveau d'une des extrémités latérales (20, 21) de l'espace intermédiaire (6) et une deuxième partie (26, 27) s'étendant depuis ladite première partie (24) et reposant sur la paroi externe (3C) de l'un (3) desdits compartiments (3, 4), la première partie (24) s'étendant sur sensiblement toute la profondeur desdits compartiments (3, 4).

2. Structure isolante selon la revendication 1, caractérisée en ce que la deuxième partie (26, 27) se compose d'une nervure (26) servant de chicane et se terminant par une partie (27) disposée perpendiculairement à ladite nervure (26) et reposant sur la paroi externe (3C) dudit premier (3) des compartiments (3, 4).

3. Structure isolante selon la revendication 2, caractérisée en ce que la première partie (24) des moyens de séparation (22, 23) est espacée de l'autre compartiment (4).

4. Structure isolée selon la revendication 2, caractérisée en ce que la première partie (24) des moyens de séparation (22, 23) repose sur l'autre compartiment (4).

5. Structure isolée selon la revendication 1, caractérisée en ce que les moyens de séparation (22, 23) sont en matière plastique afin de coopérer avec la matière isolante de façon à fixer cette dernière sur lesdits moyens de séparation.

6. Structure isolée selon la revendication 2, caractérisée en ce que les moyens de séparation (22, 23) sont fixés par de la colle ou n'importe quel adhésif similaire connu sur les compartiments (3, 4) par l'intermédiaire de la partie (27) associée à leur nervure (26) et par l'intermédiaire de la première partie (24) respectivement.
